# EUROPEAN PATENT APPLICATION

(11) **EP 4 818 771 A1**
(43) Date of publication of application: **07.10.2026**
(21) Application number: 24896816.6
(22) Date of filing: 29.11.2024
(51) Int. Cl.: G02B 5/18, G02B 5/26, G02B 6/02, G02B 6/12

(54) **BRAGG DIFFRACTION GRATING DEVICE INTEGRATED IN A WAVEGUIDE AND USE OF SAME**

(30) Priority: 30.11.2023 ES 202330999
(71) Applicant: Universitat Politécnica de Valencia, 46022 Valencia (ES)
(72) Inventor: PASTOR ABELLÁN, Daniel, 46022 Valencia Valencia (ES); MUÑOZ MUÑOZ, Pascual, 46022 Valencia Valencia (ES); MICO CABANES, Gloria, 46022 Valencia Valencia (ES)
(74) Representative: TRBL Intellectual Property
(86) International application number: PCT/ES2024/070753
(87) International publication number: WO 2025/114633

(57) **Abstract**

The present invention relates to a Bragg diffraction grating device integrated in a waveguide, wherein the Bragg diffraction grating comprises corrugations that repeat periodically along the opposite sides of the Bragg diffraction grating, wherein two consecutive corrugations in the Bragg diffraction grating are arranged on opposite sides of the Bragg diffraction grating with respect to each other. The invention also relates to a use of the device according to a first aspect of the invention to filter a Bragg wavelength value (λ_{B}) in the range of 450-1750 nm. Lastly, the invention further relates to a use of the device according to the first aspect of the invention in telecommunication systems, spectral filtering systems, laser systems and/or optical detection systems.

## Description

### FIELD OF THE INVENTION

The present invention relates to integrated photonics devices. More specifically, the invention relates to a Bragg diffraction grating device integrated in a waveguide where the corrugations are arranged alternately.

### BACKGROUND OF THE INVENTION

The field of integrated photonics encompasses the manufacture and integration of various photonic components in a common flat substrate. Said photonic components include, among others, beam splitters, diffraction gratings, wave couplers, polarisers, and interferometers. Typically, these components are incorporated into the manufacture of more complex devices that can perform a wide range of functions with applications in telecommunication systems, LiDAR, instrumentation, or sensors.

In this context, optical waveguides are key elements of integrated photonics, where said waveguides are used not only for guiding optical signals, but also for coupling, switching, splitting, multiplexing and/or demultiplexing them. Waveguide-based integrated photonics devices include integrated Bragg diffraction gratings (or IBGs), where the effective refractive index changes periodically along the light-guiding direction of the waveguide. Due to this periodic change in the refractive index, an IBG is configured to reflect certain wavelengths. In particular, the IBG is configured to reflect those components of light that propagate within the same, and which wavelength is contained within a bandwidth centred on a value known as the Bragg wavelength (λ_{B}), which is given by λ_{B}=2 n_{ef} Λ, where n_{ef} is the aforementioned effective refractive index and Λ is the grating period of said Bragg diffraction grating. In the above context, the grating period (Λ) is the length along the light-guiding direction of each period of the Bragg diffraction grating where the effective refractive index of said grating changes.

Thus, IBGs are generally used as reflectors or filters of specific wavelengths. For example, in IBGs used in telecommunication systems, the operational wavelength thereof is generally around 1550 nm. This is because, around that wavelength value, the loss during information transmission is remarkably low (around 0.2 dB/km) in the optical fibres that typically make up these telecommunication systems.

An example of IBGs are corrugated IBGs, where the periodic variation of the effective refractive index (n_{ef}) is typically achieved by forming a plurality of periodic corrugations in a light-guiding substrate (i.e., a waveguide) that entail a periodic change in the width and/or thickness of said substrate. Typically, photolithographic techniques are used in the manufacture of IBGs of this type, in other words, techniques that use light to transfer a pattern from a photomask to the surface of a substrate. Said substrate is commonly made up of materials such as silicon, and/or silicon nitride, among others. In this context, the effective refractive indices (n_{ef}) in Bragg diffraction grating (IBG) devices obtained with lithographic methods on commonly used substrates (for example, n_{ef} = 2.2 on silicon substrates, n_{ef} = 1.6 on silicon nitride substrates) require generating IBGs with grating periods (Λ) around 350 nm and 500 nm, so that the Bragg wavelength value (λ_{B}) of said IBG is around the 1550 nm characteristic of the telecommunication systems mentioned above. Nevertheless, the dimensions of the corrugations and the separation between them, as described above, may be incompatible with the minimum sizes that can be achieved with current photolithographic techniques.

There are numerous proposals for the design and optimisation of the structure and profile of IBGs that seek to obtain spectral responses in line with previously established requirements. Examples of such proposals can be found, for example, in patent applications CN 114063216 A, CN 114675371 A and WO 2023065010 A1, and in the articles R. Cheng et al., "Spectral Design of Silicon Integrated Bragg Gratings: A Tutorial", Journal of Lightwave Technology, vol. 39, no. 3, R. Cheng et al., "Apodization of Silicon Integrated Bragg Gratings Through Periodic Phase Modulation", IEEE Journal of Selected Topics in Quantum Electronics, vol. 26, no. 2, and S. Kaushal et al., "Design of Ultra-Compact On-Chip Discrete Phase Filters for Broadband Dispersion Management", Journal of Lightwave Technology, vol. 39, no. 21. Some of these proposals mention the difficulties and limitations of resolution that exist in the photolithography methods used to manufacture IBGs. However, none of the above proposals provide a solution that can be adapted to applications around wavelengths of 1500-1750 nm, nor to other lower wavelength bands such as 800-1310 nm or 480-650 nm.

Therefore, there is a need in the prior art to provide integrated diffraction gratings (IBGs), where such integrated diffraction gratings contain structural elements that can be easily manufactured by means of commonly available photolithographic manufacturing methods and which, as indicated, may be difficult for applications around 1500-1750 nm, but even impossible for other lower wavelength bands such as 800 nm-1310 nm in telecommunications or in sensor applications in the visible band (480 nm-650 nm).

### BRIEF DESCRIPTION OF THE INVENTION

The present invention provides a solution to the need in the prior art mentioned above. Thus, the present invention consists of an integrated Bragg diffraction grating comprising a plurality of corrugations. In particular, the arrangement of the corrugations in the integrated Bragg diffraction grating of the present invention is such that the number of corrugations is reduced and the separation between them is increased compared to known Bragg diffraction gratings in the prior art, while maintaining the phase condition (i.e., the Bragg wavelength (λ_{B}) of the diffraction grating) characteristic of said known integrated Bragg diffraction gratings.

Thus, in a first aspect, the invention relates to a Bragg diffraction grating device integrated in a waveguide configured to guide a light beam within the same in a light-guiding direction (z), wherein said waveguide comprises, in at least one region of said waveguide, at least one Bragg diffraction grating with a grating period (Λ), such that said Bragg diffraction grating is divided in the light-guiding direction into a plurality of sections, wherein the length of each section in the light-guiding direction is substantially equal to the length of the grating period (Λ) for said section, wherein
- the Bragg diffraction grating comprises a first side and a second side, wherein the second side is opposite the first side along the light-guiding direction, such that each section of the Bragg diffraction grating comprises a portion of the first side and a portion of the second side of the Bragg diffraction grating;
- the first side and second side of the Bragg diffraction grating each comprise a plurality of corrugations that repeat periodically along the light-guiding direction;
- each section of the Bragg diffraction grating comprises a single corrugation;
- the two corrugations comprised in two consecutive sections of the Bragg diffraction grating are arranged on opposite sides of the Bragg diffraction grating with respect to each other; and
- the separation distance (g) between two consecutive corrugations in the light-guiding direction on each side of the Bragg diffraction grating is greater than the grating period (Λ) of the Bragg diffraction grating.

In a second aspect, the invention relates to a use of the device according to the first aspect of the invention to filter a Bragg wavelength value (λ_{B}) in the range of 450-1750 nm.

Lastly, in a third aspect, the invention relates to a use of the device according to the first aspect of the invention in telecommunication systems, spectral filtering systems, integrated dispersion compensation devices, integrated laser devices, and integrated optical sensors.

### DESCRIPTION OF THE FIGURES

**Figure 1****:** standard uniform integrated Bragg diffraction grating according to the prior art.
**Figure 2****:** uniform integrated Bragg diffraction grating according to a particular embodiment of the invention.
**Figure 3****:** results of simulations with standard uniform integrated Bragg diffraction gratings according to the prior art.
**Figure 4****:** results of simulations with uniform integrated Bragg diffraction gratings according to a particular embodiment of the invention.

### DETAILED DESCRIPTION OF THE INVENTION

As stated above, the invention consists of an integrated Bragg diffraction grating comprising a plurality of corrugations. In particular, the arrangement of the corrugations in the Bragg diffraction gratings of the present invention is such that the number of corrugations is reduced and the separation between them is increased compared to known Bragg diffraction gratings in the prior art, while maintaining the phase condition (i.e., the Bragg wavelength (λ_{B}) of the diffraction grating) characteristic of said known integrated Bragg diffraction gratings.

Thus, in a first aspect, the invention relates to a Bragg diffraction grating device integrated in a waveguide configured to guide a light beam within the same in a light-guiding direction (z), wherein said waveguide comprises, in at least one region of said waveguide, at least one Bragg diffraction grating with a grating period (Λ), such that said Bragg diffraction grating is divided in the light-guiding direction into a plurality of sections, wherein the length of each section in the light-guiding direction is substantially equal to the length of the grating period (Λ) for said section, wherein
- the Bragg diffraction grating comprises a first side and a second side, wherein the second side is opposite the first side along the light-guiding direction, such that each section of the Bragg diffraction grating comprises a portion of the first side and a portion of the second side of the Bragg diffraction grating;
- the first side and second side of the Bragg diffraction grating each comprise a plurality of corrugations that repeat periodically along the light-guiding direction;
- each section of the Bragg diffraction grating comprises a single corrugation;
- the two corrugations comprised in two consecutive sections of the Bragg diffraction grating are arranged on opposite sides of the Bragg diffraction grating with respect to each other; and
- the separation distance (g) between two consecutive corrugations in the light-guiding direction on each side of the Bragg diffraction grating is greater than the grating period (Λ) of the Bragg diffraction grating.

In the context of the invention, the term "Bragg diffraction grating device" refers to a device that, by the phenomenon of Bragg diffraction, is configured to selectively reflect and/or diffract a wavelength bandwidth of radiation propagating within said device.

Specifically, the Bragg diffraction grating device of the present invention is integrated in a waveguide. Typically, these devices are known as integrated Bragg diffraction gratings (or IBGs). In the context of the invention, the term "waveguide" refers to a transparent structure that provides a refractive index contrast between the inside of said structure and the outside thereof, such that the structure is configured to guide a light beam inside the same in a light-guiding direction. In embodiments of the invention, the waveguide is surrounded by a surrounding material. In particular embodiments of the invention, the waveguide is made up of silicon (Si) with surrounding silicon oxide (SiO₂) or Silicon On Insulator (SOI), silicon nitride (Si₃N₄) with surrounding silicon oxide (SiO₂), non-stoichiometric silicon nitride (SiN_{X}) with surrounding SiO₂, SiO₂ doped with GeO₂ in the core and SiO₂ as surrounding material (silica technology), polymers, and/or semiconductor materials, preferably materials from groups III-V or groups II-VI. Polymer-based and/or semiconductor material-based guides can be in air, or alternatively surrounded by a surrounding material. As used herein, the term "core" is understood to be the guide itself. In other words, in the case of Si surrounded by SiO₂, the guide is the rectangular section which is normally made of Si.

The waveguide comprises at least one Bragg diffraction grating in at least one region thereof. Specifically, in the present invention, the diffraction grating comprises periodic perturbations generated on the inner or outer side of the waveguide. In this sense, the perturbation can be generated inside, during the manufacture of the waveguide itself (core), or outside, that is, on the cover. Thus, in embodiments of the invention, the perturbation could be made on the "outside" of the guide at a certain distance from the core by inserting gaps filled with the core material so that the beam guided by the core, which also travels on the outside, is equally affected, although more weakly. These IBGs are used when less interaction of the light beam with the perturbation is required. Therefore, the Bragg diffraction grating is a region inside or outside the waveguide comprising a first side and a second side, wherein the first side is opposite the second side along the light-guiding direction, wherein the first side and second side of the Bragg diffraction grating each comprise a plurality of perturbations (i.e., a plurality of corrugations) that repeat alternately on the first side and on the second side, such that two consecutive corrugations in the Bragg diffraction grating are arranged on opposite sides of the Bragg diffraction grating with respect to each other. Said Bragg diffraction grating comprises a plurality of sections, wherein the length of each section in the light-guiding direction is substantially equal to the so-called grating period (Λ). In this sense, the above expression "substantially equal" refers to the fact that said length is equal to the grating period (Λ), except for deviations inherent to the process of generating (i.e., manufacturing) the Bragg diffraction grating. In a particular embodiment of the invention, the Bragg diffraction grating is generated by a photolithographic method. On the other hand, in particular embodiments of the invention, the number of sections comprised in the Bragg diffraction grating is between 200 and 10000, preferably between 200 and 4000. In particular embodiments of the invention, the number of sections comprised in the Bragg diffraction grating is 200, 300, 400, 500, 600, 700, 800, 900, 1000, 1100, 1200, 1300, 1400, 1500, 1600, 1700, 1800, 1900, 2000, 2100, 2200, 2300, 2400, 2500, 2600, 2700, 2800, 2900, 3000, 3100, 3200, 3300, 3400, 3500, 3600, 3700, 3800, 3900, 4000, 4200, 4400, 4600, 4800, 5000, 5200, 5400, 5600, 5800, 6000, 6500, 7000, 7500, 8000, 8500, 9000, 9500, or 10000.

In the above context, the plurality of corrugations of the Bragg diffraction grating is equivalent to producing a periodic perturbation of the effective refractive index (n_{ef}) of the inside of the waveguide in the region of the same that comprises the Bragg diffraction grating. Consequently, the Bragg diffraction grating device is configured to reflect those components of radiation propagating within the same, and which wavelength is contained within a bandwidth centred on a value known as the Bragg wavelength (λ_{B}), which is given by the following equation: λ_{B} = 2 n_{ef} Λ, where n_{ef} is the effective refractive index in the region of the waveguide comprising the Bragg diffraction grating, and Λ is the grating period of said Bragg diffraction grating. In the context of the invention, guides that propagate only one mode, the fundamental mode, are commonly used. If other modes existed, then they could be reflected according to the same equation where n_{ef} would be the effective index of each mode, which is different. Furthermore, it is necessary to consider whether the mode is even or odd, so that if it is odd the contributions of the "first side" are subtracted from the contributions of the "second side" and would be cancelled, which also happens in standard IBGs.

As described above, the grating period (Λ) of the Bragg diffraction grating determines the Bragg wavelength value (λ_{B}) of the same, and, consequently, determines the spectral selectivity of said Bragg diffraction grating. In particular embodiments of the invention, the grating period (Λ) of the Bragg diffraction grating is between 100 nm and 500 nm. In particular embodiments of the invention, the grating period (Λ) of the Bragg diffraction grating is substantially equal to 100 nm, 105 nm, 110 nm, 115 nm, 120 nm, 125 nm, 130 nm, 135 nm, 140 nm, 145 nm, 150 nm, 155 nm, 160 nm, 165 nm, 170 nm, 175 nm, 180 nm, 185 nm, 190 nm, 195 nm, 200 nm, 205 nm, 210 nm, 215 nm, 220 nm, 225 nm, 230 nm, 235 nm, 240 nm, 245 nm, 250 nm, 255 nm, 260 nm, 265 nm, 270 nm, 275 nm, 280 nm, 285 nm, 290 nm, 295 nm, 300 nm, 305 nm, 310 nm, 315 nm, 320 nm, 325 nm, 330 nm, 335 nm, 340 nm, 345 nm, 350 nm, 355 nm, 360 nm, 365 nm, 370 nm, 375 nm, 380 nm, 385 nm, 390 nm, 395 nm, 400 nm, 405 nm, 410 nm, 415 nm, 420 nm, 425 nm, 430 nm, 435 nm, 440 nm, 445 nm, 450 nm, 455 nm, 460 nm, 465 nm, 470 nm, 475 nm, 480 nm, 485 nm, 490 nm, 495 nm, or 500 nm. In the above context, the expression "substantially equal" refers to the fact that the grating period (Λ) is equal to the corresponding value, except for deviations inherent to the process of generating the Bragg diffraction grating. The value for the grating period (Λ) in a particular device will be determined by the wavelength of the particular application (which will determine λ_{B}) and by the technology/material in which the waveguide is manufactured (which will determine n_{ef}). In particular embodiments of the present invention, the value of the grating period (Λ) can be constant in the Bragg diffraction grating, or it can be variable in the Bragg diffraction grating, Λ(z), along the light-guiding direction (z). Thus, the invention is compatible with chirped Bragg diffraction gratings or Bragg diffraction gratings with any other type of amplitude or phase design, as explained below.

Furthermore, the Bragg diffraction grating has a duty cycle (DC), which is given by the ratio between the perturbation width (p) and the grating period (Λ), wherein the perturbation width (p) is the length of the perturbation in the light-guiding direction (z). Thus, the duty cycle can be represented by the equation DC= p/Λ. For a grating with DC=0.5, the maximum effect of the perturbations is obtained, while for DC<0.5 and DO>0.5 the effect is reduced. In this way, the strength of an IBG can be "chirped" in such a way that a greater or lesser reflectivity or strength of the reflected signal is produced in λ_{B}. In particular embodiments of the invention, the duty cycle of the Bragg diffraction grating is substantially equal to 10%, 20%, 30%, 40%, 50%, 60%, 70%, 80%, or 90%. In a particular embodiment of the invention, the duty cycle of the Bragg diffraction grating is substantially equal to 50%. In the above context, the expression "substantially equal" refers to the fact that said duty cycle is equal to the corresponding value, except for deviations inherent to the generation of the Bragg diffraction grating. In the context of the invention, a duty cycle of the Bragg diffraction grating equal to 50% implies a separation distance (g) between two consecutive corrugations in the light-guiding direction that is substantially equal to 1.5 times the grating period (Λ). In general, g = Λ*(2-DC) where DC belongs to the interval (0, 1). Thus, if DC=0.5, then g=1.5 Λ; if DC=0.2, then g=1.8 Λ; etc. Thus, the separation distance (g) between two consecutive corrugations in the light-guiding direction on each side of the Bragg diffraction grating is greater than the grating period (Λ) of the Bragg diffraction grating, and less than twice the grating period (Λ). In particular embodiments of the invention, said separation distance (g) is 1.1; 1.2; 1.3; 1.4; 1.5; 1.6; 1.7; 1.8; or 1.9 times the grating period (Λ). In a particular embodiment of the invention, the separation distance (g) between two consecutive corrugations in the light-guiding direction is substantially equal to 1.5 times the grating period (Λ). In this sense, the above expression "substantially equal" refers to the fact that the separation distance (g) between two consecutive corrugations in the light-guiding direction is equal to the corresponding value, except for deviations inherent to the process of generating the Bragg diffraction grating. In the context of the invention, the duty cycle (DC) can be variable along the light-guiding direction (z), i.e., DC(z) along the IBG. This modification would be equivalent to the case of chirped Bragg diffraction gratings and is equally applicable to removing alternating perturbations. The variation of DC(z) is called "windowing" or "apodisation" and is used to give the IBG certain improved performance features in the shape of its spectrum.

Likewise, in particular embodiments of the invention, the effective refractive index (n_{ef}) in at least one region of the Bragg diffraction grating is between 1.5 and 2.5. In particular embodiments of the invention, the effective refractive index (n_{ef}) in at least one region of the Bragg diffraction grating is substantially equal to 1.5, 1.6, 1.7, 1.8, 1.9, 2.0, 2.1, 2.2, 2.3, 2.4, or 2.5. In this sense, the expression "substantially equal" refers to the fact that said effective refractive index (n_{ef}) is equal to the corresponding value, except for deviations inherent to the generation of the Bragg grating.

Each corrugation of the Bragg diffraction grating has a width (ΔW). In the context of the present invention, the "width" (ΔW) of a corrugation refers to its maximum length in the direction perpendicular to the light-guiding direction. The width of the corrugations of the Bragg diffraction grating determines the strength of said diffraction grating, in other words, it determines the reflectivity of the Bragg direction grating. In the context of the invention, the term "reflectivity" refers to the ratio between the energy of the radiation entering the Bragg diffraction grating and the energy of the radiation reflected by the same. In particular embodiments of the invention, the width (ΔW) of the corrugations comprised in the Bragg diffraction grating is between 50 nm and 600 nm. In particular embodiments of the invention, the width of the corrugations comprised in the Bragg grating is substantially equal to 50 nm, 60 nm, 70 nm, 80 nm, 90 nm, 100 nm, 110 nm, 120 nm, 130 nm, 140 nm, 150 nm, 200 nm, 250 nm, 300 nm, 350 nm, 400 nm, 450 nm, 500 nm, 550 nm, or 600 nm. In the above context, the expression "substantially equal" refers to the fact that said width (ΔW) is equal to the corresponding value, except for deviations inherent to the generation of the Bragg diffraction grating. In embodiments of the invention, all corrugations have the same width (ΔW). In alternative embodiments of the invention, the corrugations can be of variable width (ΔW). In other words, each corrugation can have a different width (ΔW).

Furthermore, in particular embodiments of the invention, the corrugations may be rectangular in shape or have smoothed flanks depending on the type of manufacturing process. In a particular embodiment of the invention, the corrugations comprised in the Bragg diffraction grating are substantially rectangular in shape. In the above context, the expression "substantially rectangular" refers to the fact that said corrugation is rectangular in shape, except for deviations inherent to the generation of the Bragg diffraction grating. In embodiments, all corrugations have the same shape. In alternative embodiments, the corrugations can have variable shape, with different ΔW(z) values along the Bragg diffraction grating that usually vary "slowly" with respect to z compared to Λ. This is called apodisation or windowing of the perturbation and is typically used to reduce the amplitude of side lobes in the spectral response or the group delay ripple in linear chirped diffraction gratings with applications, for example, of chromatic dispersion compensation.

Thus, in particular embodiments of the invention, the Bragg diffraction grating is a uniform Bragg diffraction grating, or an apodised and/or chirped Bragg diffraction grating. In the above context, the term "uniform Bragg diffraction grating" refers to the fact that the effective refractive index (n_{ef}), the perturbation width ΔW and the Bragg period Λ are substantially equal throughout the region of the waveguide comprising the Bragg diffraction grating. In the above context, the expression "substantially equal" refers to the fact that the cited parameters are equal (i.e., constant) throughout that region, except for deviations inherent to the generation of the Bragg diffraction grating. On the other hand, in the context of the present invention, the term "apodised Bragg diffraction grating" refers to the fact that the value of ΔW in the region of the waveguide comprising the Bragg diffraction grating varies gradually along said region. In particular embodiments of the invention, the apodised Bragg diffraction grating is a Gaussian apodised Bragg diffraction grating. Likewise, in the context of the present invention, the term "chirped Bragg diffraction grating" refers to the fact that the value of the Bragg period (Λ) varies along the Bragg diffraction grating. In this case, the Bragg period in the chirped Bragg diffraction grating varies normally Λ(z) being constant n_{ef}. Alternatively, Λ can be constant and n_{ef}(z) can be variable, since in both cases the λ_{B} = 2 n_{ef} is modified λ_{B}(z).

In particular embodiments of the present invention, the waveguide of the device comprises more than one Bragg diffraction gratings, wherein each Bragg diffraction grating is comprised in a different region in the propagation direction z of said waveguide. In particular embodiments of the invention, the Bragg wavelength value (λ_{B}) is substantially the same for all the more than one Bragg diffraction gratings comprised in different inner regions of said waveguide. In the above context, the expression "substantially the same" refers to the fact that the corresponding value is the same, except for deviations inherent to the generation of the Bragg diffraction grating. In particular embodiments of the invention, the Bragg wavelength value of at least one of the more than one Bragg diffraction gratings comprised in different inner regions of said waveguide is different from the Bragg wavelength value of the rest of the more than one Bragg diffraction gratings comprised in different inner regions of said waveguide. In particular embodiments of the invention, the grating period value (Λ) of at least one of the more than one Bragg diffraction gratings comprised in different inner regions of said waveguide is different from the grating period value (Λ) of the rest of the more than one Bragg diffraction gratings comprised in different inner portions of said waveguide. In other words, the Bragg diffraction gratings can have the same grating period value (Λ), or they can have different grating period values (Λ) from each other.

In embodiments of the present invention, the Bragg wavelength value (λ_{B}) of the at least one Bragg diffraction grating is in the range of 450 nm-1750 nm. In particular embodiments of the invention, the Bragg wavelength value (λ_{B}) of the at least one Bragg diffraction grating is in the range of 480 nm-650 nm covering the visible range, or is in the range of 800 nm to 1750 nm covering the O-, E-, S-, C-, L- and U-bands of the infrared spectrum in the context of optical communications. In particular embodiments of the invention, the Bragg wavelength value (λ_{B}) of the at least one Bragg diffraction grating is in the range of 1260-1360 nm (O-Band, Original), in the range of 1360-1460 nm (E-Band, Extended), in the range of 1460-1530 nm (S-Band, Short Wavelength), in the range of 1530-1565 nm (C-Band, Conventional), in the range of 1565-1625 nm (L-Band, Long Wavelength), or in the range of 1625-1675 nm (U-Band, Ultra-long Wavelength). Thus, in a second aspect, the invention relates to a use of the device according to the first aspect of the invention to filter a Bragg wavelength value (λ_{B}) in the range of 450 nm-1750 nm, preferably in the range of 480 nm-650 nm covering the visible range, or preferably in the range of 800 nm to 1750 nm covering the O-, E-, S-, C-, L- and U-bands of the infrared spectrum in the context of optical communications. As described above, the spectral selectivity of the waveguide-based Bragg diffraction grating device according to the present invention allows its use in a wide variety of systems. Thus, a third object of the present invention relates to the use of the waveguide-based Bragg diffraction grating device according to any of the embodiments of the invention described herein, in telecommunication systems, spectral filtering systems, integrated dispersion compensation devices, integrated laser devices, and integrated optical sensors. For example, in non-limiting embodiments, the waveguide-based Bragg diffraction grating device according to the present invention can be used as a filter, a multiplexer, and/or a demultiplexer in telecommunication systems, or as a filtering reflector element forming part of an external cavity laser (ECL).

All the terms and embodiments described above are applicable to any aspect and embodiment of the invention. According to the present invention, the singular term "the", "a", "an" refers equally to its corresponding plural form "the", "some", unless it is clear from the context that the term refers to a species in the singular. The term "comprises" or "comprising", as used herein, also describes "consists of" or "consisting of" in accordance with the generally accepted patent practice.

### EXAMPLES

The following invention is described by means of the following examples, which should be interpreted as merely illustrative and not limiting to the scope of the invention.

### Example 1: Integrated Bragg diffraction gratings

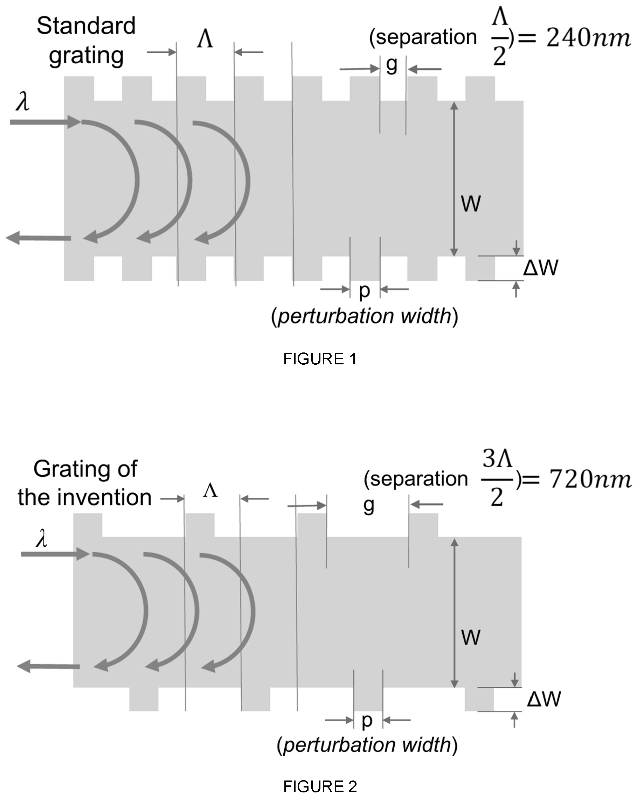

Figure 1 shows an example of a standard integrated Bragg diffraction grating (IBG), wherein a standard uniform Bragg diffraction grating is comprised in a region of a waveguide according to the prior art. Said standard Bragg diffraction grating is manufactured so that it is divided into a plurality of sections of length equal to one grating period (Λ) in the light-guiding direction of said waveguide. Likewise, the standard Bragg diffraction grating comprises a first side and a second side opposite each other, which run parallel to said light-guiding direction.

Furthermore, both the first side and the second side of the standard Bragg diffraction grating each comprise a plurality of rectangular corrugations. The width (ΔW) of all the corrugations in Figure 1 is the same along the entire Bragg diffraction grating. Moreover, the separation (W) in the direction perpendicular to the light-guiding direction between a portion of the first side of the Bragg diffraction grating in Figure 1 and an opposite portion of the second side of the same that do not comprise corrugations is the same along the entire standard Bragg diffraction grating. Furthermore, on each side of the standard Bragg diffraction grating, the separation distance (g) between two consecutive corrugations is equal to 0.5 times the grating period (Λ). Likewise, each region of the standard Bragg diffraction grating comprises a corrugation on each side thereof, such that each corrugation on the first side of the standard Bragg diffraction grating has opposite it a corrugation on the second side thereof. In the above context, when a light beam is guided from left to right in the standard Bragg diffraction grating in Figure 1, in each periodic section, the different modes contained in said beam interact with the corrugation (perturbation) on the first side and with the corrugation on the second side. Consequently, among the components of different optical frequencies of the light beam that are guided inside the waveguide, those which wavelength is contained within a bandwidth centred on the Bragg wavelength (λ_{B}) are reflected by the standard Bragg diffraction grating, according to the equation: λ_{B} = 2 n_{ef} Λ, where n_{ef} is different for each mode. In other words, the waves experience small reflections at the discontinuities (called perturbations) which cause the light beams to deviate from their normal course and radiate in other directions, resulting in many types of Bragg gratings. In this case, those that couple the light in just the opposite direction are described here according to the famous formula λ_{B} = 2 n_{ef} Λ.

Figure 2 shows, on the contrary, an IBG where a uniform Bragg diffraction grating is comprised in a portion of a waveguide according to a particular embodiment of the present invention. Analogous to the Bragg diffraction grating in Figure 1, the Bragg diffraction grating in Figure 2 is divided into a plurality of sections of length equal to one grating period (Λ) in the light-guiding direction of the waveguide. Furthermore, the Bragg diffraction grating in Figure 2 also comprises a first side and a second side opposite with respect to said light-guiding direction, wherein both the first side and the second side thereof each comprise a plurality of rectangular corrugations. The width (ΔW) of all the corrugations in Figure 2 is the same along the entire Bragg diffraction grating. Likewise, in Figure 2 the separation (W) in the direction perpendicular to the light-guiding direction between a portion of the first side of the Bragg diffraction grating and an opposite portion of the second side of the same that do not comprise corrugations is the same along the entire Bragg diffraction grating.

However, unlike the standard Bragg diffraction grating in Figure 1, each region of the Bragg diffraction grating comprises a single corrugation, and the two corrugations of two consecutive regions of the Bragg diffraction grating are arranged on opposite sides with respect to each other. Specifically, in Figure 2, the separation distance (g) between two consecutive corrugations on each side of the Bragg diffraction grating is equal to 1.5 times the grating period (Λ) since for this particular example the duty cycle is 50% (DC=0.5).

In the above context, the Bragg diffraction grating in Figure 2 is equivalent to alternately "eliminating" on each side the corrugations of the Bragg diffraction grating in Figure 1, without modifying the grating period (Λ) of the same. Thus, when in Figure 2 a light beam is guided from left to right in the Bragg diffraction grating according to the present invention, in each region the different modes contained in said beam interact with a single corrugation of the Bragg diffraction grating. Consequently, the strength of said interaction is reduced by half compared to Figure 1, but the components of the light beam reflected by the Bragg diffraction grating in Figure 2 are also those which wavelength is contained within a bandwidth centred on the Bragg wavelength (λ_{B}), that is, a bandwidth centred on λ_{B} = 2 n_{ef} Λ.

### Example 2: Results of integrated Bragg diffraction grating simulations

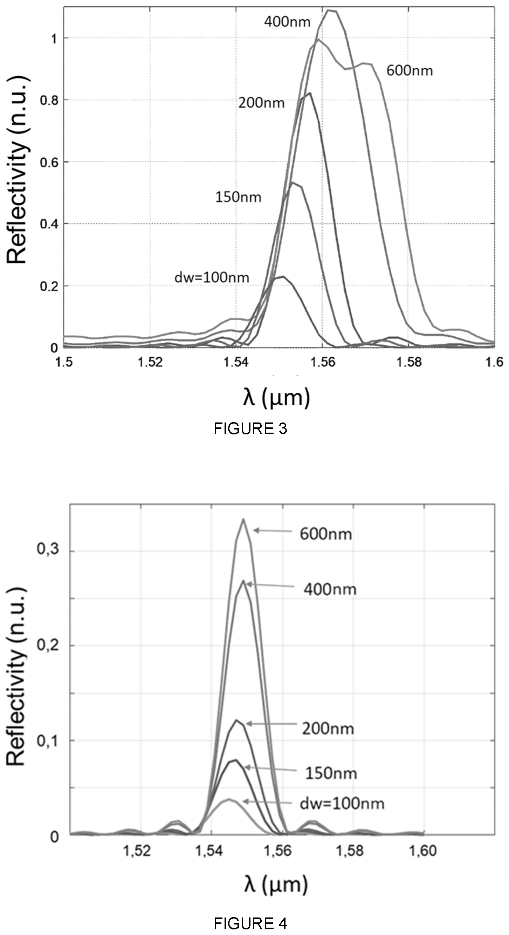

Figure 1 shows an example of a standard integrated Bragg diffraction grating (IBG), while Figure 3 shows a graph with the results of FDTD (Finite Domain Time Difference) simulations that simulate the guiding of a light beam in five grating periods in a standard IBG device, analogous to the one shown in Figure 1. In particular, in these simulations the standard Bragg diffraction gratings comprise more sections than the standard Bragg grating in Figure 1, specifically 200 periodic sections with a grating period (Λ) of 404.6 nm. Likewise, the standard Bragg gratings comprise rectangular corrugations on each side of each standard Bragg grating, wherein the separation distance (g) between two consecutive corrugations on each side is equal to 0.5 times the grating period (Λ). Consequently, the duty cycle of said standard Bragg gratings is equal to 50%. Furthermore, along each standard Bragg diffraction grating, the separation (W) in the direction perpendicular to the direction of light propagation between a portion of the first side of the standard Bragg diffraction grating and an opposite portion of the second side of the same that do not comprise corrugations is the same along the entire standard Bragg diffraction grating and equal to 1 µm. Furthermore, the effective refractive index (n_{ef}) of the waveguide of width W is equal to 1.9112 (according to the materials used in the simulation example), so for a target Bragg wavelength of 1545 nm, the aforementioned Bragg period (Λ=404.6 nm) has been set. Thus, the standard Bragg diffraction gratings of each simulation differ in the width (ΔW) of the corrugations, so that in the first standard Bragg grating said width (ΔW) is equal to 100 nm, in the second it is equal to 150 nm, in the third it is equal to 200 nm, in the fourth it is equal to 400 nm, and in the fifth it is equal to 600 nm.

In the above context, Figure 3 shows the reflectivity as a function of the wavelength (λ) of a simulated light beam that is guided from left to right in the standard IBG device described above. As expected, the reflectivity maxima are located in the vicinity of the Bragg wavelength (λ_{B}) target of the simulation of said gratings (1545 nm). Likewise, the reflectivity around the Bragg wavelength (λ_{B}) is greater the larger the width (ΔW) of the corrugations.

Figure 2 shows, on the contrary, an IBG where a uniform Bragg diffraction grating is comprised in a portion of a waveguide according to a particular embodiment of the present invention, while Figure 4 shows a graph with the results of FDTD simulations that simulate the guiding of a light beam in an IBG device according to the present invention, analogous to the one shown in Figure 2. In these simulations, the Bragg diffraction gratings comprise 200 sections of length equal to one grating period (Λ) of 404.6 nm, and rectangular corrugations on each side of each Bragg diffraction grating. However, the separation distance (g) between two consecutive corrugations on each side is equal to 1.5 times the grating period (Λ). Consequently, the duty cycle of said Bragg diffraction gratings is equal to 50%. Furthermore, as for the standard gratings in the simulations in Figure 3, the separation (W) in the direction perpendicular to the direction of light propagation between a portion of the first side of the Bragg diffraction grating and an opposite portion of the second side of the same that do not comprise corrugations is the same along each Bragg diffraction grating and equal to 1 µm. Likewise, the effective refractive index (n_{ef}) is equal to 1.89. Furthermore, the Bragg diffraction gratings of each simulation again differ in the width (ΔW) of the corrugations, so that in the first Bragg grating said width (ΔW) is equal to 100 nm, in the second it is equal to 150 nm, in the third it is equal to 200 nm, in the fourth it is equal to 400 nm, and in the fifth it is equal to 600 nm.

Thus, Figure 4 shows the reflectivity as a function of the wavelength (λ) of a simulated light beam that is guided from left to right through the IBG device according to the present invention described above. Indeed, comparing the results of Figures 3 and 4, it can be seen that the reflectivity of the light beam simulated in the Bragg diffraction gratings according to the present invention is less than in the standard diffraction gratings. However, as described above, the reflectivity maxima in Figure 4 are located in the vicinity of the same Bragg wavelength (λ_{B}) target of the simulation as those in Figure 3 (1545 nm). On the other hand, the reflectivity around the Bragg wavelength (λ_{B}) is again greater the larger the width (ΔW) of the corrugations. In the case of Figure 4, a shift to the right is observed when increasing ΔW because the corrugations/perturbations themselves have a certain influence on the average refractive index experienced by the propagating beam. In other words, n_{ef} grows slightly as ΔW increases. This is a normal, known phenomenon in Bragg gratings. There are methods to compensate for this effect. However, the simulation in Figure 4 has not used such methods to keep the model simpler. To give some data, a shift of 20 nm in 1550 nm represents 20/1550=1.2%, in other words, n_{ef} goes from 1.89 (guide without perturbations) to 1.91 due to the existence of perturbations. This occurs much less in the case of the IBGs of the invention, where the IBGs are "decimated" because there are fewer perturbations and they affect the beam less, although a slight shift is also observed.

## Claims

1. A Bragg diffraction grating device integrated in a waveguide configured to guide a light beam within the same in a light-guiding direction (z), wherein said waveguide comprises, in at least one region of said waveguide, at least one Bragg diffraction grating with a grating period (Λ), such that said Bragg diffraction grating is divided in the light-guiding direction into a plurality of sections, wherein the length of each section in the light-guiding direction is substantially equal to the length of the grating period (Λ) for said section, wherein
- the Bragg diffraction grating comprises a first side and a second side, wherein the second side is opposite the first side along the light-guiding direction, such that each section of the Bragg diffraction grating comprises a portion of the first side and a portion of the second side of the Bragg diffraction grating;
- the first side and second side of the Bragg diffraction grating each comprise a plurality of corrugations that repeat periodically along the light-guiding direction;
- each section of the Bragg diffraction grating comprises a single corrugation;
- the two corrugations comprised in two consecutive sections of the Bragg diffraction grating are arranged on opposite sides of the Bragg diffraction grating with respect to each other; and
- the separation distance (g) between two consecutive corrugations in the light-guiding direction on each side of the Bragg diffraction grating is greater than the grating period (Λ) of the Bragg diffraction grating.

2. The device according to claim 1, wherein the length of the grating period (Λ) of the Bragg diffraction grating is between 100 nm and 500 nm.

3. The device according to any one of claims 1 to 2, wherein on each side of the Bragg diffraction grating, the separation distance (g) between two consecutive corrugations in the light-guiding direction is substantially equal to 1.5 times the grating period (Λ) of the Bragg diffraction grating.

4. The device according to claim 3, wherein the duty cycle of the Bragg diffraction grating is substantially equal to 50%.

5. The device according to any one of claims 1 to 4, wherein the number of sections comprised in the Bragg diffraction grating is between 200 and 10000.

6. The device according to any one of claims 1 to 5, wherein the effective refractive index (n_{ef}) in at least one region of the Bragg diffraction grating is between 1.5 and 2.5.

7. The device according to any one of claims 1 to 6, wherein the waveguide is made up of silicon (Si) with surrounding silicon oxide (SiO₂) or Silicon On Insulator (SOI), silicon nitride (Si₃N₄) with surrounding silicon oxide (SiO₂), non-stoichiometric silicon nitride (SiN_{X}) with surrounding SiO₂, SiO₂ doped with GeO₂ in the core and SiO₂ as surrounding material, polymers, and/or semiconductor materials, preferably materials from groups III-V or groups II-VI.

8. The device according to any one of claims 1 to 7, wherein the width (ΔW) of the corrugations comprised in the Bragg diffraction grating is between 50 nm and 600 nm.

9. The device according to any one of claims 1 to 8, wherein the corrugations comprised in the Bragg diffraction grating are substantially rectangular.

10. The device according to any one of claims 1 to 9, wherein the Bragg diffraction grating is a uniform Bragg diffraction grating, or an apodised and/or chirped Bragg diffraction grating.

11. The device according to claim 10, wherein the apodised Bragg diffraction grating is a Gaussian apodised Bragg diffraction grating.

12. Use of the device according to any of claims 1 to 11, for filtering a Bragg wavelength value (λ_{B}) that is in the range of 450 nm-1750 nm.

13. Use of the device according to claim 12, for filtering a Bragg wavelength value (λ_{B}) that is in the range of 480 nm-650 nm covering the visible range, or that is in the range of 800 nm to 1750 nm covering the O-, E-, S-, C-, L- and U-bands of the infrared spectrum in the context of optical communications.

14. Use of the device according to claim 13, for filtering a Bragg wavelength value (λ_{B}) that is in the range of 1260-1360 nm (O-Band, Original), in the range of 1360-1460 nm (E-Band, Extended), in the range of 1460-1530 nm (S-Band, Short Wavelength), in the range of 1530-1565 nm (C-Band, Conventional), in the range of 1565-1625 nm (L-Band, Long Wavelength), or in the range of 1625-1675 nm (U-Band, Ultra-long Wavelength).

15. Use of the device according to any one of claims 1 to 11, in telecommunication systems, spectral filtering systems, integrated dispersion compensation devices, integrated laser devices, and integrated optical sensors.
